# EUROPEAN PATENT SPECIFICATION

(11) **EP 2 923 538 B1**
(45) Date of publication and mention of the grant of the patent: **30.09.2020**
(21) Application number: 14200008.2
(22) Date of filing: 23.12.2014
(51) Int. Cl.: A01B 23/02, A01B 35/24

(54) **Locking construction for agricultural machines**
Arretierungskonstruktion für landwirtschaftliche Maschinen
Structure de verrouillage pour machines agricoles

(30) Priority: 24.03.2014 IT MI20140497
(43) Date of publication of application: 30.09.2015
(73) Proprietor: BIANCHI S.r.l., 26034 Piadena (CR) (IT)
(72) Inventor: Bianchi, Sandro, 26034 Piadena (CR) (IT)
(74) Representative: Mari, Marco Giovanni

(56) References cited:
- WO-A1-2006/028392
- DE-A1-102012 005 027
- US-A- 3 425 755
- US-A- 4 047 823

## Description

### BACKGROUND OF THE INVENTION

The present invention relates to a locking construction for agricultural machines.

More specifically, the present invention relates to a bracket locking construction for clamping to an agricultural machine framework the spring or resilient tooth elements operating for processing soil, either directly or through soil processing discs.

US-A-3 425 755, WO-A-2006/028392, US-A-4 047 823 disclose a locking construction for locking a functional element, such as a spring, to a framework of an agricultural machine, according to the preamble of the present invention.

At present, for clamping said springs to the agricultural machine framework, simple clamping brackets are used, which, however, have functional limitations, since said springs provide resilient pushing forces crosswise to the agricultural machine driving or feeding direction.

In particular, if said springs are of a trawl or disc type, their crosswise directed forces tend to laterally affect and/or turn the clamping brackets, thereby generating operating and clamping strength problems.

### SUMMARY OF THE INVENTION

The aim of the present invention is to provide a locking construction for clamping springs to an agricultural machine framework overcoming the above mentioned drawbacks.

Within the scope of this aim, a main object of the invention is to provide such a locking construction enhancing the overall agricultural machine mechanical strength, in particular against lateral forces and offsets.

Another object of the present invention is to provide such a locking construction allowing the springs to be quickly and easily clamped.

A further object of the present invention is to provide such a locking construction which may be made from easily commercially available elements and materials and which, moreover, is very competitive from a mere economic standpoint.

Yet another object of the present invention is to provide such a locking construction which is very reliable and safe in operation.

According to one aspect of the present invention, the above mentioned aim and objects, as well as yet other objects, which will become more apparent hereinafter, are achieved by a locking construction for agricultural machines, comprising the features of claim 1.

The functional element consists, for example, of a spring or resilient tooth element, operating, in processing soil, either directly or through an associated disc element.

### BRIEF DESCRIPTION OF THE DRAWINGS

Further characteristics and advantages of the present invention will become more apparent hereinafter from the following disclosure of a preferred, though not exclusive, embodiment of the invention, which is illustrated, by way of an indicative but not limitative example, in the accompanying drawings, where:

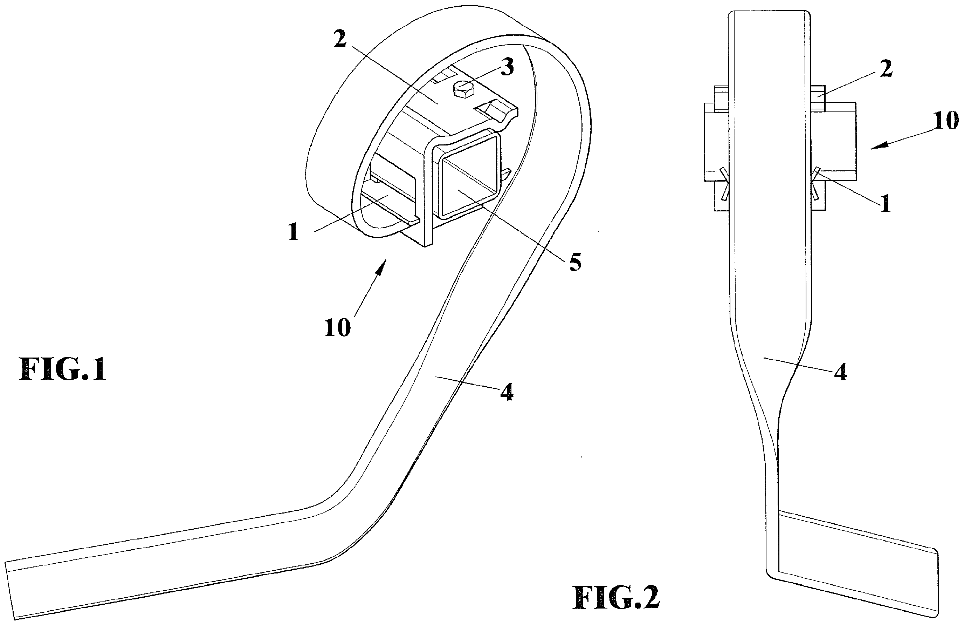

Figure 1 is a perspective view of the locking construction according to the present invention, being shown in a use condition thereof;
Figure 2 is a front view of the locking construction in a said use condition thereof;

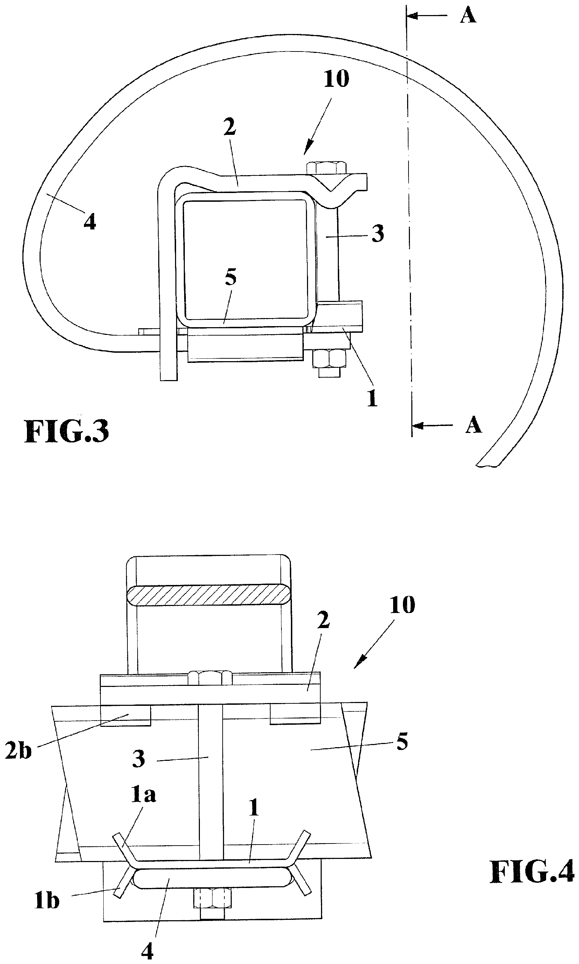

Figure 3 is a side view of the locking construction in a said use condition thereof;
Figure 4 is a further front view, as cross-sectioned through the section plane A-A of Figure 3;

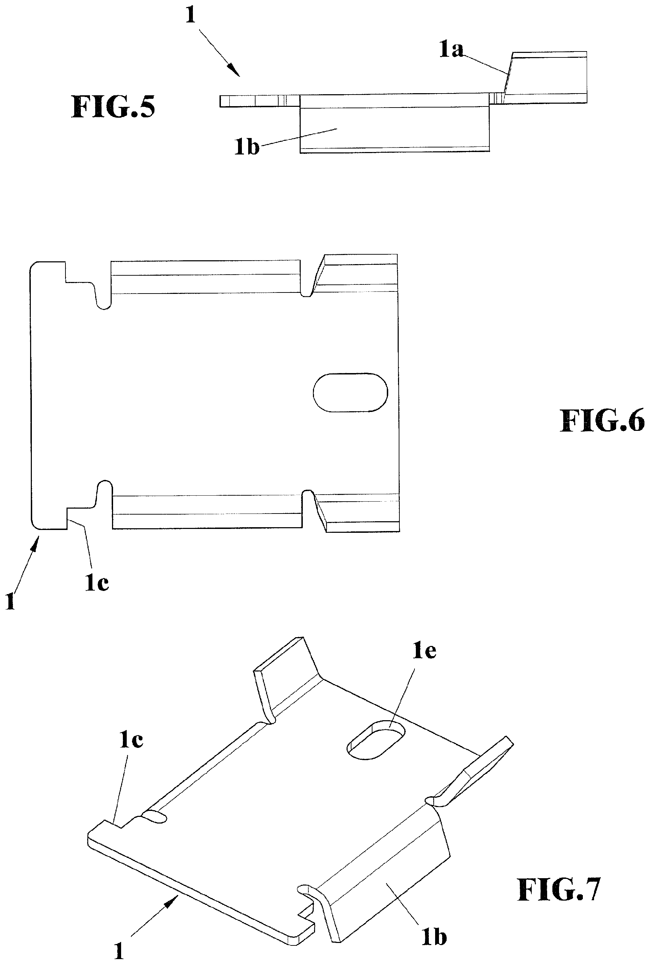

Figure 5 is a side view of the counter-bracket;
Figure 6 is a top plan view of said counter-bracket;
Figure 7 is a perspective view of said counter- bracket;

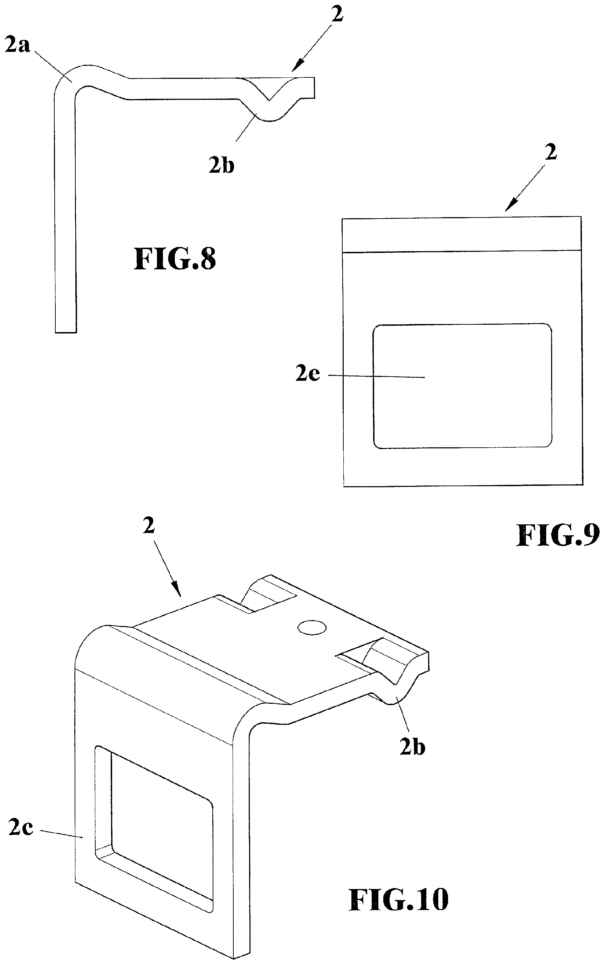

Figure 8 is a side view of the top bracket;
Figure 9 is a perspective view of said top bracket;
Figure 10 is a further perspective view of said top bracket:
Figure 11 shows a sequence of operations for clamping or locking a spring to a framework of an agricultural machine by the locking construction according to the present invention;
Figure 12 shows a diagram illustrating the evolvement of forces operating in the subject construction in comparison with a conventional attachment or clamping system; and
Figures 13 and 14 show the forces operating on same elements of the inventive construction.

### DESCRIPTION OF THE PREFERRED EMBODIMENTS

With reference to the number references of the above mentioned figures, the locking construction according to the present invention, which has been generally indicated by the reference number 10, comprises a top bracket 2, to be clamped to a framework 5 of an agricultural machine, not shown in the figures, and a counter-bracket 1 cooperating with the top bracket to lock a further functional operating element 4 to said machine framework 5.

The construction further comprises a clamping or locking device consisting of a clamping or locking bolt 3 engaging the counter-bracket 1 and top bracket 2 to lock the functional or operating element 4 on the framework 5.

Said functional or operating element 4 comprises, for example, a spring or a resilient tooth element for processing soil either directly or through a disc or plow element.

The top bracket 2, counter-bracket 1 and clamping bolt 3 clamp or lock the spring 4 on the framework 5, and provide five operating effects, occurring as the component pieces are clamped to one another by said clamping bolt 3.

The first locking effect is provided in a vertical direction, on the front of the framework 5, through the clamping bolt 3 tightly coupling the components to one another.

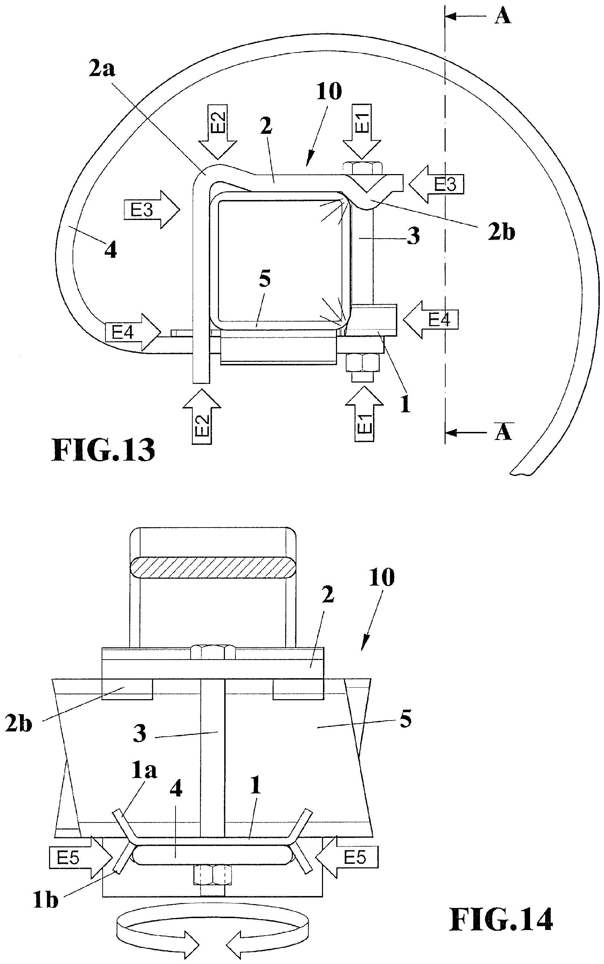

This first locking effect is indicated by the reference arrow E1 in Figure 13.

The second locking effect is provided in a vertical direction, on the rear of the framework 5, where the top bracket 2 has a special concave curved shape 2a which, through a resilient deformation of the framework material, provides a "clamping" action.

This second locking effect is indicated by the reference arrow E2 in Figure 13.

The third locking effect is provided in a horizontal direction on the top of the framework, where the top bracket 2 has a bossed configuration, including a plurality of backward offset "bosses" 2b, arranged with respect to the framework at a shorter distance than prior brackets.

Said bosses operate on a framework edge to draw or pull the bracket 2 against the framework, to cause said bracket to tightly contact said framework.

This third locking effect is indicated by the reference arrow E3 in Figure 13.

The fourth locking effect is directed in a horizontal direction, on the bottom of the framework, where the counter-bracket 1 comprises two tongues or fins engaged against the front part of the framework for frontward drawing the counter-bracket 1 as the clamping bolt 3 is locked.

Said counter-bracket 1 comprises a plurality of tooth elements 1c meshing with or engaging the rear face 2c of the top bracket 2.

Thus, the counter-bracket 1 will draw or pull the top bracket 2 against the framework 5.

This fourth effect is indicated by the reference arrow E4 in Figure 13.

The fifth locking effect is achieved in a turning or rotary direction.

The counter-bracket 1, engaged between the top bracket 2 and framework 5, comprises bent edge portions 1b locking the side portions of the spring 4 thereby preventing any rotary movement of the spring and framework.

Thus, the spring is prevented from being laterally offset and turning under the framework.

This fifth locking effect has been indicated by the reference arrow E5 in Figure 14.

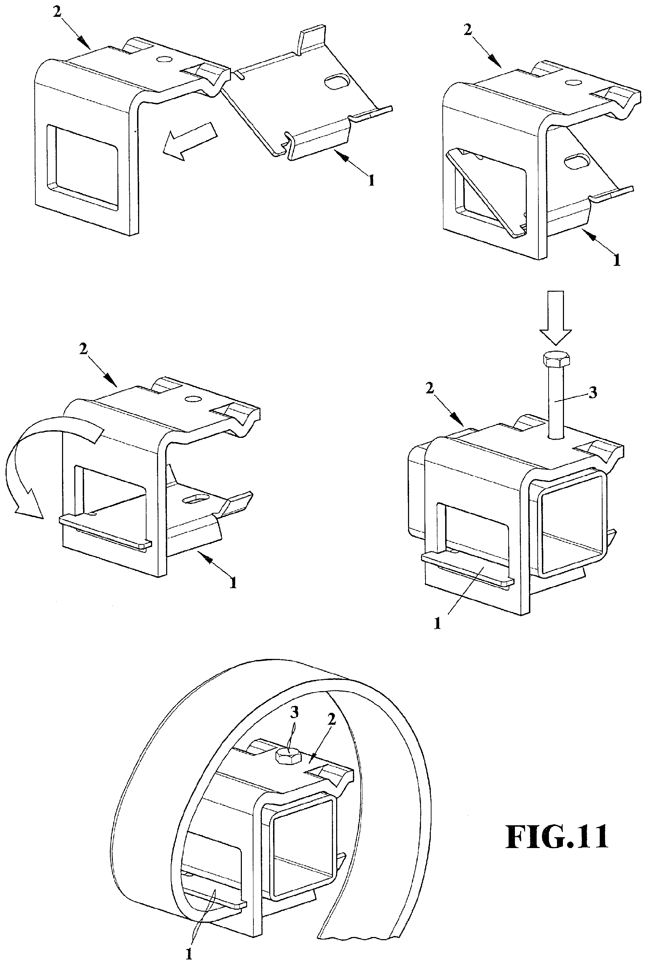

For assembling the construction, the top bracket 2 comprises a window 2e having such a height allowing the counter-bracket 1 to be diagonally engaged, as schematically shown in Figure 11.

Thus, after having engaged the counter-bracket 1, the latter is so turned to prevent the tooth elements 1c from disengaging from the top bracket while engaging against the surface 2c.

The counter-bracket 1 comprises a slot 1e facilitating a screw insertion in the assembling operation and allowing the bracket 2 to be approached as the clamping bolt 3 is locked.

Thus, as the clamping bolt is clamped or locked, the tongues 1a will slide on the edge of the framework 5, frontward drawing the counter-bracket 1 and causing the tooth elements 1c to approach the surface 2c of the top bracket 2, thereby locking all the mentioned components.

The locking construction according to the present invention may be in particular, though not exclusively, used in all cases in which the springs provide pushing forces crosswise to the agricultural machine feeding in driving direction, which forces would tend to laterally offset and/or turn the springs of a trawl or disc type.

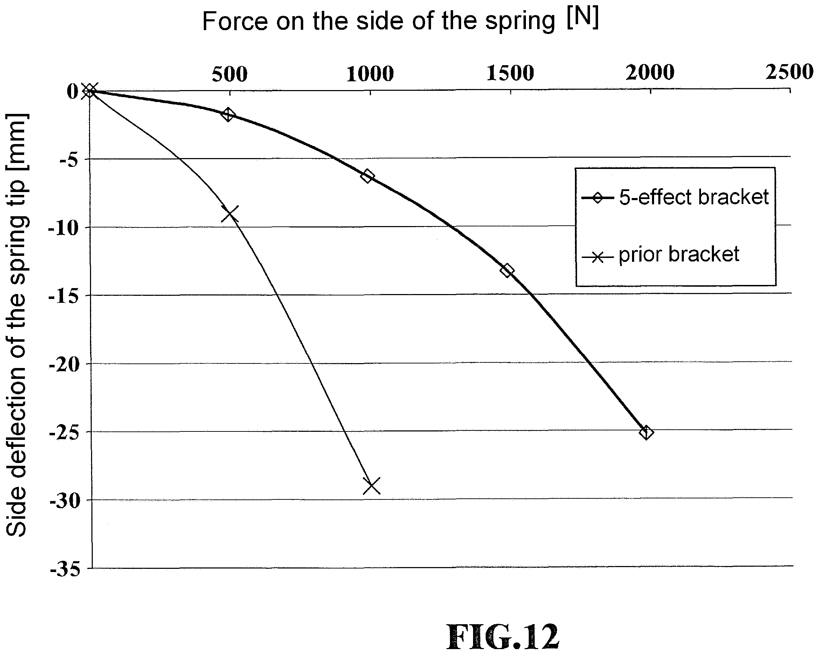

As clearly shown in the diagram of Figure 12, with the side force applied to the spring being the same, the inventive locking construction will reduce a side offset, at the tip of the spring, of about five times that of a prior simple-bracket locking system.

It has been found that the invention fully achieves the intended aim and objects.

In practicing the invention, the used materials, as well as the contingent size and shapes can be any, according to requirements.

## Claims

1. A locking construction (10) for agricultural machines comprising a framework (5), wherein said locking construction (10) comprises a top bracket (2) to be clamped to said framework (5), and a counter-bracket (1) cooperating with said top bracket (2) to lock a functional element (4) to said framework (5), said construction comprising moreover a clamping or locking device, engaging said counter-bracket (1) and top bracket (2) to lock said functional element (4) on said framework (5), wherein said clamping device consists of a clamping bolt (3), wherein said functional element (4) consists of a spring or resilient tooth element, operating for processing soil either directly or through a disc element, wherein said top bracket (2) has a concave arched shape (2a) allowing said top bracket to be resiliently deformed,
**characterized in that:**
- said top bracket (2) comprises backward offset boss elements (2b), arrangeable near the framework (5), operable on a framework edge to draw said top bracket (2) against said framework (5) and causing said top bracket (2) to tightly contact said framework (5);
- said counter-bracket (1) comprises two tongues (1a) engageable against a front portion of said framework (5) and frontward drawing said counter-bracket (1), as said clamping bolt is clamped, wherein said counter-bracket (1) comprises counter-bracket edges (1b) so bent as to lock side portions of said spring thereby preventing said spring and said framework (5) from mutually turning;
- said counter-bracket (1) comprises a tooth element pattern (1c) engageable against a rear face of the top bracket (2), and
- said top bracket (2) comprises a window (2e) for receiving said counter-bracket (1), said counter-bracket (1) comprising a slot (1e) facilitating an insertion of said clamping bolt (3) in an assembling operation and allowing said top bracket (2) to approach as said clamping bolt (3) is clamped.

2. A method for using a locking construction (10) according claim 1 to lock a functional element (4) to a framework (5) of agricultural machines, **characterized in that** said method comprises the steps of:
- to provide a counter-bracket (1);
- to provide a top bracket (2);
- to provide a clamping bolt (3);
- to clamp said top bracket (2), counter-bracket (1) and clamping bolt (3), to lock the functional element (4) on the framework (5), so achieving five operating effects occurring as the component pieces are clamped to one another by said clamping bolt (3); a first locking effect occurring in a vertical direction, on a front of the framework (5), through said clamping bolt (3) tightly clamping the components; a second locking effect occurring in a vertical direction, on a rear of the framework (5), where the top bracket (2) has a concave arch shape (2a) providing clamping by a resilient deformation of its material; a third locking effect occurring in a horizontal direction, on the top of the framework (5), where said top bracket (2) has a boss pattern with a plurality of bosses (2b) operating on the framework edge to draw the top bracket (2) against said framework (5) to tightly contact said framework (5); a fourth locking effect occurring in a horizontal direction, on the bottom of the framework (5), where said counter-bracket (1) comprises two tongues (1a) engaged against a front portion of the framework (5) and, as the clamping bolt (3) is clamped, frontward drawing said counter-bracket (1); the tooth elements (1c) of the counter-bracket (1) engaging against a rear face of the top bracket (2), thereby, as the counter-bracket (1) is drawn, the top bracket (2) is abutted against the framework (5); a fifth effect occurring in a rotary direction; said counter-bracket (1), engaging between the top bracket (2) and framework (5), including bent counter-bracket edges (1b) to lock side portions of said spring and prevent any rotary movement of the spring and framework (5) while hindering a side offset of the spring and a rotation of said spring under the framework (5).

## Patentansprüche

1. Eine Verriegelungskonstruktion (10) für landwirtschaftliche Maschinen, die einen Rahmen (5) umfasst, wobei die besagte Verriegelungskonstruktion (10) eine obere Halterung (2), die an den besagten Rahmen (5) geklemmt wird, und eine Gegenhalterung (1) umfasst, die mit der besagten oberen Halterung (2) zusammenwirkt, um ein funktionelles Element (4) an dem besagten Rahmen (5) zu verriegeln, wobei die besagte Konstruktion außerdem eine Klemm- oder Verriegelungsvorrichtung umfasst, die die besagte Gegenhalterung (1) und die obere Halterung (2) in Anspruch nimmt, um das funktionelle Element (4) an dem besagten Rahmen (5) zu verriegeln, wobei die besagte Klemmvorrichtung aus einem Klemmbolzen (3) besteht, wobei das besagte funktionelle Element (4) aus einem Feder- oder elastischen Zahnelement besteht, das entweder direkt oder über ein Scheibenelement zur Bearbeitung von Erde arbeitet, wobei die besagte obere Halterung (2) eine konkav gewölbte Form (2a) aufweist, die eine elastische Verformung der besagten oberen Halterung ermöglicht,
**dadurch gekennzeichnet, dass:**
- die besagte obere Halterung (2) rückwärts versetzte Nabenelemente (2b) umfasst, die in der Nähe des Rahmens (5) angeordnet werden können und an einer Kante des Rahmens betätigt werden können, um die besagte obere Halterung (2) gegen den besagten Rahmen (5) zu ziehen und zu bewirken, dass die besagte obere Halterung (2) den besagten Rahmen (5) eng berührt;
- die besagte Gegenhalterung (1) zwei Zungen (1a) umfasst, die gegen einen vorderen Abschnitt des besagten Rahmens (5) in Anspruch genommen werden können und die besagte Gegenhalterung (1) nach vorne ziehen können, wenn der besagte Klemmbolzen eingeklemmt wird, wobei die besagte Gegenhalterung (1) Gegenhalterungskanten (1b) umfasst, die so gebogen sind, dass sie Seitenabschnitte der besagten Feder verriegeln, wodurch verhindert wird, dass sich die besagte Feder und der besagte Rahmen (5) gegenseitig drehen;
- die besagte Gegenhalterung (1) ein Zahnelementmuster (1c) umfasst, das gegen eine Rückseite der oberen Halterung (2) in Anspruch genommen werden kann, und
- die besagte obere Halterung (2) ein Fenster (2e) zur Aufnahme der besagten Gegenhalterung (1) umfasst, wobei die besagte Gegenhalterung (1) einen Schlitz (1e) umfasst, der ein Einführen des besagten Klemmbolzens (3) in einem Montagevorgang erleichtert und es der besagten oberen Halterung (2) ermöglicht, sich anzunähern, wenn der besagte Klemmbolzen (3) festgeklemmt wird.

2. Ein Verfahren zur Verwendung einer Verriegelungskonstruktion (10) gemäß Anspruch 1, um ein funktionelles Element (4) an einem Rahmen (5) von landwirtschaftlichen Maschinen zu verriegeln, **dadurch gekennzeichnet, dass** das besagte Verfahren folgende Schritte umfasst:
- eine Gegenhalterung (1) vorzusehen;
- eine obere Halterung (2) vorzusehen;
- einen Klemmbolzen (3) vorzusehen;
- die besagten obere Halterung (2), Gegenhalterung (1) und Klemmbolzen (3) festzuklemmen, um das funktionelle Element (4) am Rahmen (5) zu verriegeln, wodurch fünf Betriebseffekte erzielt werden, die auftreten, wenn die Komponenten durch den besagten Klemmbolzen (3) aneinander geklemmt werden; ein erster Verriegelungseffekt, der in einer vertikalen Richtung an einer Vorderseite des Rahmens (5) durch den besagten Klemmbolzen (3) auftritt, der die Komponenten fest einklemmt; ein zweiter Verriegelungseffekt, der in einer vertikalen Richtung an einer Rückseite des Rahmens (5) auftritt, wobei die obere Halterung (2) eine konkave Bogenform (2a) aufweist, die eine Klemmung durch eine elastische Verformung ihres Materials vorsieht; ein dritter Verriegelungseffekt, der in einer horizontalen Richtung an der Oberseite des Rahmens (5) auftritt, wobei die besagte obere Halterung (2) ein Nabenmuster mit einer Vielzahl von Naben (2b) aufweist, die auf die Rahmenkante einwirken, um die obere Halterung (2) gegen den besagten Rahmen (5) zu ziehen, um den besagten Rahmen (5) fest zu berühren; ein vierter Verriegelungseffekt, der in einer horizontalen Richtung an der Unterseite des Rahmens (5) auftritt, wobei die besagte Gegenhalterung (1) zwei Zungen (1a) umfasst, die gegen einen vorderen Abschnitt des Rahmens (5) in Anspruch genommen werden und, wenn der Klemmbolzen (3) eingeklemmt wird, die besagte Gegenhalterung (1) nach vorne ziehen; wobei die Zahnelemente (1c) der Gegenhalterung (1) gegen eine Rückseite der oberen Halterung (2) in Anspruch genommen werden, wodurch die obere Halterung (2) beim Ziehen der Gegenhalterung (1) gegen den Rahmen (5) stößt; ein fünfter Effekt, der in einer Drehrichtung auftritt; wobei die besagte Gegenhalterung (1), die zwischen der oberen Halterung (2) und dem Rahmen (5) in Anspruch genommen wird, gebogene Gegenhalterungskanten (1b) aufweist, um Seitenabschnitte der besagten Feder zu verriegeln und jegliche Drehbewegung der Feder und des Rahmens (5) zu verhindern, während ein seitliches Versetzen der Feder und eine Drehung der besagten Feder unter dem Rahmen (5) verhindert wird.

## Revendications

1. Structure de verrouillage (10) pour machines agricoles comprenant un cadre (5), dans lequel ladite structure de verrouillage (10) comprend un support supérieur (2) à serrer sur ledit cadre (5), et un contre-support (1) coopérant avec ledit support supérieur (2) pour verrouiller un élément fonctionnel (4) sur ledit cadre (5), ladite structure comprenant en outre un dispositif de serrage ou de verrouillage, engageant ledit contre-support (1) et le support supérieur (2) pour verrouiller ledit élément fonctionnel (4) sur ledit cadre (5), où ledit dispositif de serrage est constitué d'un boulon de serrage (3), où ledit élément fonctionnel (4) est constitué d'un ressort ou d'un élément denté élastique, fonctionnant pour travailler le sol soit directement soit à travers un élément à disque, où ledit support supérieur (2) a une forme arquée concave (2a) permettant de déformer élastiquement ledit support supérieur,
**caractérisée par le fait que :**
- ledit support supérieur (2) comprend des éléments de bossage décalés vers l'arrière (2b), pouvant être disposés près du cadre (5), pouvant agir sur un bord du cadre pour tirer ledit support supérieur (2) contre ledit cadre (5) et provoquant l'entrée en contact étroit dudit support supérieur (2) avec ledit cadre (5) ;
- ledit contre-support (1) comprend deux languettes (1a) pouvant s'engager contre une portion avant dudit cadre (5) et tirant vers l'avant ledit contre-support (1), lorsque ledit boulon de serrage est serré, où ledit contre-support (1) comprend des bords de contre-support (1b) pliés de manière à verrouiller les parties latérales dudit ressort empêchant ainsi ledit ressort et ledit cadre (5) de tourner mutuellement ;
- ledit contre-support (1) comprend un motif d'élément denté (1c) pouvant s'engager contre une face arrière du support supérieur (2), et
- ledit support supérieur (2) comprend une fenêtre (2e) pour recevoir ledit contre-support (1), ledit contre-support (1) comprenant une fente (1e) facilitant l'insertion dudit boulon de serrage (3) dans une opération d'assemblage et permettant audit support supérieur (2) de s'approcher lorsque ledit boulon de serrage (3) est serré.

2. Méthode d'utilisation d'une structure de verrouillage (10) selon la revendication 1 pour verrouiller un élément fonctionnel (4) sur un cadre (5) de machines agricoles, **caractérisée par le fait que** ladite méthode comprend les étapes consistant à :
- fournir un contre-support (1) ;
- fournir un support supérieur (2) ;
- fournir un boulon de serrage (3) ;
- serrer lesdits support supérieur (2), contre-support (1) et boulon de serrage (3), pour verrouiller l'élément fonctionnel (4) sur le cadre (5), obtenant ainsi cinq effets de fonctionnement se produisant lorsque les pièces sont serrées les unes aux autres par ledit boulon de serrage (3) ; un premier effet de verrouillage se produisant dans une direction verticale, sur une face avant du cadre (5), à travers ledit boulon de serrage (3) serrant fermement les composants ; un deuxième effet de verrouillage se produisant dans une direction verticale, à l'arrière du cadre (5), où le support supérieur (2) a une forme d'arc concave (2a) assurant le serrage par une déformation élastique de son matériau ; un troisième effet de verrouillage se produisant dans une direction horizontale, sur le dessus du cadre (5), où ledit support supérieur (2) a un motif de bossage avec une multitude de bossages (2b) agissant sur le bord du cadre pour tirer le support supérieur (2) contre ledit cadre (5) afin d'entrer en contact étroit avec ledit cadre (5) ; un quatrième effet de verrouillage se produisant dans une direction horizontale, sur le bas du cadre (5), où ledit contre-support (1) comprend deux languettes (1a) engagées contre une portion avant du cadre (5) et, au fur et à mesure que le boulon de serrage (3) est serré, tirant vers l'avant ledit contre-support (1) ; les éléments dentés (1c) du contre-support (1) s'engageant contre une face arrière du support supérieur (2), ainsi, lorsque le contre-support (1) est tiré, le support supérieur (2) est en butée contre le cadre (5) ; un cinquième effet se produisant dans une direction rotative ; ledit contre-support (1), s'engageant entre le support supérieur (2) et le cadre (5), comprenant des bords de contre-support pliés (1b) pour verrouiller les portions latérales dudit ressort et empêcher tout mouvement rotatif du ressort et du cadre (5) tout en prévenant un décalage latéral du ressort et une rotation dudit ressort sous le cadre (5).
